# EUROPEAN PATENT APPLICATION

(11) **EP 4 806 662 A1**
(43) Date of publication of application: **16.09.2026**
(21) Application number: 26163621.1
(22) Date of filing: 10.03.2026
(51) Int. Cl.: B41J 11/00, B41J 2/21, B41M 3/12, B41M 5/00, B41M 5/025, B41M 7/00

(54) **LIQUID DISCHARGE APPARATUS, LIQUID DISCHARGE SYSTEM, AND LIQUID DISCHARGE METHOD**

(30) Priority: 11.03.2025 JP 2025038213; 29.01.2026 JP 2026013137
(71) Applicant: Ricoh Company, Ltd., Tokyo 143-8555 (JP)
(72) Inventor: Hirano, Masanori, Tokyo 143-8555 (JP)
(74) Representative: Marks & Clerk LLP

(57) **Abstract**

A liquid discharge apparatus (10) includes a liquid discharger (121); and a controller (110). The controller (110) is configured to cause the liquid discharger to discharge a coloring liquid to a base material to form a coloring layer, form an infrared-absorptive heat-generating layer, and discharge a binder liquid to form a binder layer so that the infrared-absorptive heat-generating layer (70) is between the coloring layer and the binder layer.

## Description

### BACKGROUND

### Technical Field

The present disclosure relates to a liquid discharge apparatus, a liquid discharge system, and a liquid discharge method.

### Related Art

As an example of liquid discharge apparatuses, inkjet image forming apparatuses are known that discharge liquid ink onto paper or other sheets to form images thereon.

In such inkjet image forming apparatuses, the drying property of ink on a sheet tends to greatly influence the fixing property of the resultant image. For this reason, some inkjet image forming apparatuses are provided with a drying unit, such as an infrared heater, to accelerate drying of the ink on the sheet. As an example, Japanese Unexamined Patent Application Publication No. 2001-226618 proposes a technique for using an ink containing an infrared absorbent to accelerate drying of the ink.

Aside from image forming apparatuses that directly discharge ink onto sheets or other recording media, another example is apparatuses that transfer images onto textiles or other recording media. An apparatus of this type discharges a coloring liquid onto a film or other base material to form a coloring layer thereon, then discharges a binder liquid onto the coloring layer to form a binder layer thereon, and separates the coloring layer and the binder layer together from the base material.

Such apparatuses are also typically provided with a drying unit that dries both the binder layer and the coloring layer. It is therefore necessary to propose a technique to accelerate drying of both the binder layer and the coloring layer because the drying treatment therefor tends to be somewhat time-consuming.

### SUMMARY

An object of the present disclosure is to propose a technique to accelerate drying of a binder layer and a coloring layer.

The present disclosure described herein provides a liquid discharge apparatus that includes a liquid discharger and a controller. The controller is configured to cause the liquid discharger to discharge a coloring liquid to a base material to form a coloring layer, form an infrared-absorptive heat-generating layer, and discharge a binder liquid to form a binder layer so that the infrared-absorptive heat-generating layer is between the coloring layer and the binder layer.

The present disclosure described herein provides a liquid discharge system that includes the liquid discharge apparatus and a drying device. The drying device is configured to emit infrared rays to the base material on which the coloring layer, the infrared-absorptive heat-generating layer, and the binder layer have been formed by the liquid discharge apparatus, to dry the base material.

The present disclosure described herein provides a liquid discharge method that includes discharging a coloring liquid to a base material to form a coloring layer, forming an infrared-absorptive heat-generating layer after forming of the coloring layer, and discharging a binder liquid to form a binder layer so that the infrared-absorptive heat-generating layer is between the coloring layer and the binder layer.

According to at least one aspect of the present disclosure, drying of a binder layer and a coloring layer can be accelerated.

### BRIEF DESCRIPTIONS OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic configuration view of a digital-to-film or direct-to-film (DTF) image forming system that uses hot-melt resin powder;
FIG. 2 is a schematic configuration view of a compact DTF image forming system;
FIG. 3 is a schematic configuration view of a DTF image forming system that uses a binder liquid;
FIG. 4 is a view of states of a binder layer, a coloring layer, and a base material when drying treatment is performed with a hot-air drying device;
FIG. 5 is a view of states of the binder layer, the coloring layer, and the base material when the drying treatment is performed with an infrared (IR) drying device;
FIG. 6 is a view of an example of a configuration of a transfer layer;
FIG. 7 is a cross-sectional view of a state of a transfer layer after the transfer layer has been transferred onto a recording medium;
FIG. 8 is a view of an example of a configuration of a liquid discharge apparatus;
FIG. 9 is a view of a state in which drying treatment is being performed;
FIG. 10 is a view of a configuration of an image forming system;
FIG. 11 is a graph illustrating an example of an infrared absorption rates of inks used for forming images;
FIG. 12 is a view of an example of a liquid discharge apparatus that discharges a black ink as an infrared absorbent;
FIG. 13 is a view of an example of a liquid discharge apparatus that discharges an infrared absorbent except a black ink;
FIG. 14A is a view of an example of a first ink layer formed with a colored ink;
FIG. 14B is a view of an example of a second ink layer formed with a white ink;
FIG. 14C is a view of an example of an infrared-absorptive heat-generating layer formed with solid painting;
FIG. 15 is a view of an example of an infrared-absorptive heat-generating layer formed through halftone processing;
FIG. 16 is a plan view of a serial-type liquid discharge apparatus in which a plurality of liquid discharge heads is mounted in a staggered fashion on a single carriage;
FIG. 17 is a plan view of a serial-type liquid discharge apparatus in which a plurality of liquid discharge heads is separately mounted in a staggered fashion on two carriages;
FIG. 18 is a view of an example of a syringe-type dispenser;
FIG. 19 is a view of an example of a tube-type dispenser;
FIG. 20 is a view of an example of a valve-type dispenser; and
FIG. 21 is a block diagram illustrating a hardware configuration of a liquid discharge system.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Prior to describing embodiments of the present disclosure, some disadvantages with contemporary liquid discharge systems will be described using, as an example, digital-to-film or direct-to-film (DTF) system image forming systems. A DTF image forming system described herein refers to a system that forms a coloring layer and an adhesive layer on a base material having a film shape, for example, and then transfers the coloring layer onto a recording medium with the adhesive layer therebetween.

### Hot-melt Resin Powder DTF Image Forming System

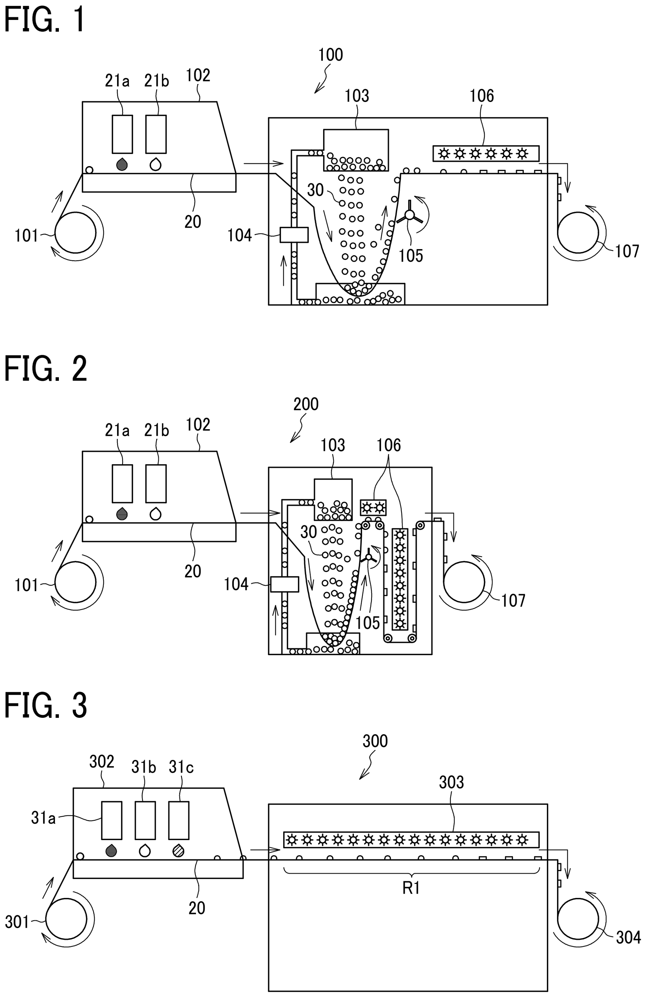

FIG. 1 is a schematic configuration view of a DTF image forming system that uses a hot-melt resin powder as a material for forming an adhesive layer.

As illustrated in FIG. 1, a DTF image forming system 100 includes a base material feeding device 101, a liquid discharge apparatus 102, a resin powder supply device 103, a resin powder circulating device 104, a resin powder removing device 105, a heating device 106, a base material collecting device 107, and some other components.

The base material feeding device 101 is a device from which a base material 20 wound in a roll shape is to be fed. When fed by the base material feeding device 101, the base material 20 is conveyed toward the liquid discharge apparatus 102.

When the base material 20 reaches the liquid discharge apparatus 102, the liquid discharge apparatus 102 discharges liquid inks onto the base material 20, thereby forming a coloring layer representing an image on the base material 20. In this case, the liquid discharge apparatus 102 includes: a first liquid discharge head 21a that discharges a colored ink (except a white ink) for mainly forming an image; and a second liquid discharge head 21b that discharges a white ink for forming a foundation. The first liquid discharge head 21a and the second liquid discharge head 21b are an example of a liquid discharger. First, the first liquid discharge head 21a discharges the colored ink onto the base material 20 that has reached the liquid discharge apparatus 102, thereby forming a first ink layer representing the image on the base material 20. Then, the second liquid discharge head 21b discharges the white ink onto the first ink layer (image), thereby forming a white second ink layer serving as a foundation layer on the first ink layer. Both the first ink layer and the second ink layer formed on the base material 20 in this manner will eventually be transferred together onto a textile or other recording medium. However, it should be noted that, when both the first ink layer and the second ink layer are transferred, the vertical positions thereof are reversed. Thus, the first ink layer (image) is formed on the base material 20 before the second ink layer (foundation layer) is formed thereon. If the foundation layer (second ink layer) is unnecessary, the liquid discharge apparatus 102 does not necessarily have to include the second liquid discharge head 21b that discharges the white ink. In addition, the first liquid discharge head 21a does not necessarily have to discharge a single colored ink. Alternatively, the first liquid discharge head 21a may discharge multiple colored inks, including yellow, cyan, magenta, and black inks for supporting creation of a color image, in which case a white ink might be included in such colored inks.

After both the first ink layer and the second ink layer have been formed on the base material 20, the base material 20 is conveyed toward the resin powder supply device 103. While the base material 20 is moving under the resin powder supply device 103, the resin powder supply device 103 is supplying a hot-melt resin powder 30 to the base material 20. In this case, the resin powder supply device 103 sprays the hot-melt resin powder 30. When the hot-melt resin powder 30 adheres to the surface of the base material 20 on which both the first ink layer and the second ink layer have been formed, the hot-melt resin powder 30 absorbs the moisture of the ink on the base material 20 and aggregates. Meanwhile, the hot-melt resin powder 30 may also adhere to a portion of the base material 20 in which neither the first ink layer nor the second ink layer has been formed. The hot-melt resin powder 30 on this portion is removed as unnecessary resin powder by the resin powder removing device 105 while the base material 20 is moving near the resin powder removing device 105. In this case, some of the hot-melt resin powder 30 may fall to the floor without adhering to the base material 20, but the fallen hot-melt resin powder 30 is collected by the resin powder circulating device 104 and then circulated and returned to the resin powder supply device 103.

After having left the resin powder supply device 103, the base material 20 is conveyed to the heating device 106, in which the hot-melt resin powder 30 on the base material 20 is then heated. As a result, the hot-melt resin powder 30 is melted and solidified, so that the hot-melt resin powder 30 is converted into a uniform hot-melt resin layer that functions as an adhesive layer. For the purpose of accelerating the solidification of the molten hot-melt resin powder 30, a cooling treatment, such as an air-cooling treatment, is optionally subjected to the resultant hot-melt resin layer. Thereafter, the base material 20 is wound around and collected by the base material collecting device 107. After the base material 20 has been collected, the first ink layer, the second ink layer (foundation layer), and the hot-melt resin layer on the base material 20 will be transferred onto a textile or other recording medium as an integrated transfer layer; however, the step of transferring the transfer layer onto the recording medium will not be described herein.

DTF image forming systems, as described above, have been rapidly and increasingly employed as an alternative to direct-to-garment (DTG) image forming systems, which have been popular in the field where images are printed on textiles such as cloth. DTF image forming systems do not involve a wet pretreatment, which is to be performed in DTG image forming systems and thus can perform treatments in a completely dry environment. In addition, DTF image forming systems can print many images at one time on a long-roll film, whereas DTG image forming systems individually print images on recording media.

However, DFT image forming systems have some disadvantages. To spray a hot-melt resin powder onto a base material to form a hot-melt resin layer serving as an adhesive layer, a DFT image forming system involves having some additional devices, such as a resin powder supply device 103 that sprays and supplies the hot-melt resin powder, a resin powder removing device 105 that removes unnecessary hot-melt resin powder 30, and a heating device 106 that heats and melts the hot-melt resin powder 30. As a result, DFT image forming systems may become too large.

To address such disadvantages, compact DTF image forming systems have been recently proposed.

### Compact DTF Image Forming System

FIG. 2 illustrates a schematic configuration of a compact DTF image forming system.

As illustrated in FIG. 2, a DTF image forming system 200 includes a heating device 106 that includes a part extending in a horizontal direction and another part extending in a vertical direction. With this configuration, the DTF image forming system 200 can be made smaller in the horizontal direction than the DTF image forming system 100 illustrated in FIG. 1.

Image forming systems using hot-melt resin powder (hot-melt resin powder DTF image forming systems), as described above, may disadvantageously emit large noise because such image forming systems apply physical vibrations to a base material for the sake of removing unnecessary hot-melt resin powder. Furthermore, since hot-melt resin powder may scatter in the air, adhere to other components due to static electricity, and be fixed to the components due to moisture, hot-melt resin powder DTF image forming systems involve some additional control processes, such as a process of collecting removed hot-melt resin powder and a process of suppressing scattering of the hot-melt resin powder.

In light of the above disadvantages, DTF image forming systems that use, instead of the above hot-melt resin powders, a binder liquid containing, for example, polyurethane resin as a main component thereof to form an adhesive layer have been proposed.

### Binder Liquid DTF Image Forming System

FIG. 3 is a schematic configuration view of a DTF image forming system that uses a binder liquid.

As illustrated in FIG. 3, a DTF image forming system 300 includes a base material feeding device 301, a liquid discharge apparatus 302, a drying device 303, a base material collecting device 304, and some other components. It should be noted that the DTF image forming system 300 performs a step of transferring an ink layer (transfer layer) on a base material onto a textile or other recording medium; however, a transfer device used for this transfer step will not be described herein.

The base material feeding device 301 is a device by which a base material 20 wound in a roll shape is to be fed, similar to the above base material feeding device 101. When fed by the base material feeding device 301, the base material 20 is conveyed toward the liquid discharge apparatus 302.

When the base material 20 reaches the liquid discharge apparatus 302, the liquid discharge apparatus 302 discharges liquid inks and a binder liquid onto the base material 20. In this case, the inks include a colored ink (except a white ink) for forming an image and a white ink for forming a foundation; however, the white ink does not necessarily have to be used if the foundation is unnecessary. In the following description, the colored ink for forming an image and the white ink for forming a foundation may be collectively referred to as the "coloring liquids", whereas the ink layer formed with both the colored ink and the white ink may be referred to as the "coloring layer".

The liquid discharge apparatus 302 includes: a first liquid discharge head 31a that discharges a colored ink except a white ink; a second liquid discharge head 31b that discharges a white ink for forming a foundation; and a third liquid discharge head 31c that discharges a binder liquid. The first liquid discharge head 31a, the second liquid discharge head 31b, and the third liquid discharge head 31c are an example of a liquid discharger. In addition, the first liquid discharge head 31a does not necessarily have to discharge a single colored ink. Alternatively, the first liquid discharge head 31a may discharge multiple colored inks, including yellow, cyan, magenta, and black inks for supporting creation of a color image, in which case a white ink might be included in such colored inks.

In the DTF image forming system 300, when the base material 20 reaches the liquid discharge apparatus 302, the first liquid discharge head 31a first discharges the colored ink onto the base material 20, thereby forming a first ink layer representing an image on the base material 20. The second liquid discharge head 31b then discharges the white ink onto the first ink layer (image), thereby forming a second ink layer serving as a foundation layer on the first ink layer. The third liquid discharge head 31c then discharges the binder liquid onto the second ink layer, thereby forming a binder layer on the second ink layer.

After the binder layer has been formed on the base material 20, the base material 20 is conveyed to the drying device 303, in which both the binder layer (binder liquid) and the coloring layer (coloring liquid) are then subjected to drying treatment. As a result, the binder layer is dried and converted into an adhesive layer. Thereafter, the base material 20 is wound around and collected by the base material collecting device 304.

DTF image forming systems using a binder liquid (binder liquid DTF image forming system), as described above, do not involve using a hot-melt resin powder and thus can suppress emission of large noise, such as noise made during a process of removing a hot-melt resin powder. In addition, such DTF image forming systems do not involve some control processes, such as processes of preventing scattering, adhesion, and the like of a hot-melt resin powder, which may be inconvenient to an operator.

Nevertheless, binder liquid DTF image forming systems also have some disadvantages that will be described below. First, it takes a long time to solidify a binder liquid through drying. Thus, there are cases where, when a base material is wound and collected, the binder liquid is not sufficiently dried. In such cases, the base material may be fixed to another component during the process of drying the binder liquid which is to be subsequently performed. This disadvantage is called "blocking". In addition, when the base material is wound with the binder liquid insufficiently dried, a coloring layer in the base material becomes separated from the base material before being conveyed onto a recording medium. This disadvantage is called "picking". Furthermore, if the surface of the binder liquid is dried but the interior of the binder liquid is not sufficiently dried, the undried part of the binder liquid may be blown out, or the binder layer may be shifted by pressure applied to the base material during the winding or during the subsequent processing step, such as a cutout processing step for each pattern. For this reason, an image forming system using a binder liquid has to sufficiently dry the binder liquid.

In addition to the above, the binder liquid can flow unless the binder liquid is dried or solidified. Thus, when the base material is inclined during the treatment of drying the binder liquid, the binder liquid may flow due to the inclination of the base material and eventually flow away from the base material. However, since most of the ink forming both the first ink layer and the second ink layer is absorbed and held by a coloring liquid receiving layer in the base material, the undried ink does not drip immediately when the base material is inclined. Nevertheless, when the amount of ink adhering to the base material excessively increases, the ink may drip. Therefore, it is necessary to convey the base material while keeping the base material in a horizontal state so that the binder liquid or the ink does not flow down during the drying treatment. On the other hand, a highly viscous binder liquid is less likely to drip during the conveying. As the binder liquid becomes more viscous, however, energy for discharging the binder liquid increases, and nozzles in the liquid discharge head are more prone to be clogged. Therefore, the content of the resin in the binder liquid is set to a necessary minimum so that the binder liquid does not become too viscous. For example, the viscosity of a binder liquid, which is higher than the viscosity of an ink for forming an image or others, is typically set to within the range from 6 mPa·s to 13 mPa·s.

As described above, a binder liquid DTF image forming system has to convey a base material while keeping the base material in a horizontal state until the binder liquid has been dried and solidified. As a result, a conveying path R1 (see FIG. 3) used for the drying treatment may become too long. As a result, a binder liquid DTF image forming system that has been proposed for the purpose of providing improved convenience might be disadvantageous in terms of size, compared to the compact hot-melt resin powder DTF image forming system 200 illustrated in FIG. 2 and be difficult to install accordingly. Therefore, binder liquid DTF image forming systems are faced with difficulty in compactness for the purpose of facilitating the installation.

In light of the above, another object of the present disclosure is to provide a compact binder liquid DTF image forming system.

As described above, a primary factor in enlarging a binder liquid DTF image forming system is the length of the conveying path used for drying. In short, by shortening the conveying path used for drying, the binder liquid DTF image forming system can be suppressed from being enlarged, namely, can be made compact. Furthermore, to shorten the conveying path while maintaining productivity, it is necessary to dry a binder layer and a coloring layer in a short time. Therefore, there is a demand for a drying device to have an improved capacity to dry both the binder layer and the coloring layer.

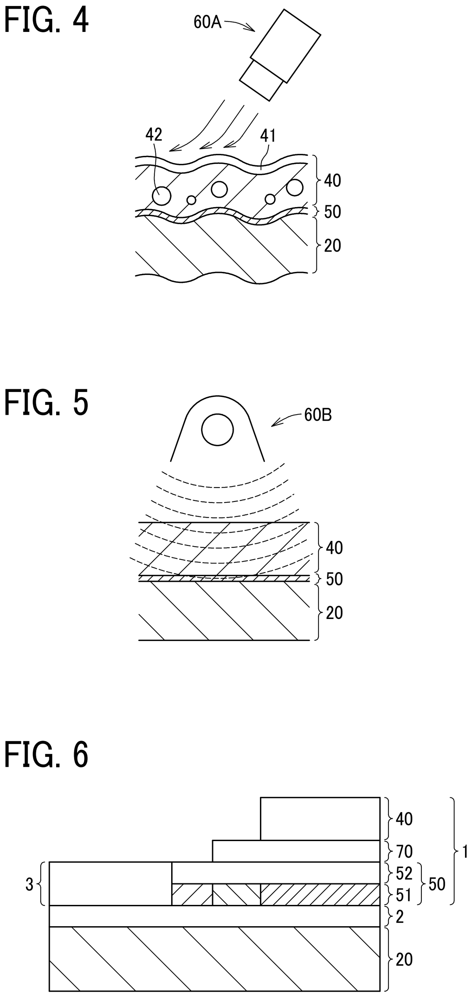

Examples of a drying device used in a binder liquid DTF image forming system include: a hot-air drying device 60A, as illustrated in FIG. 4, that blows hot air; and an infrared (IR) drying device 60B, as illustrated in FIG. 5, that emits infrared rays.

FIGS. 4 and 5 illustrate states of a binder layer 40, a coloring layer (ink layer) 50, and a base material 20 when the drying treatment is performed, respectively, with the drying devices 60A and 60B.

As illustrated in FIG. 4, the hot-air drying device 60A blows hot air onto the surface of the binder layer 40, thereby drying the binder layer 40. In this case, some disadvantages may occur: a dried film 41 is formed on the surface to which the hot air is blown; and bubbles 42 are created inside the binder layer 40. In addition, the heat transmitted from the hot-air drying device 60A to the base material 20 may deform or damage the base material 20. Thus, the hot-air drying device 60A might damage the base material 20 when the output of the hot-air drying device 60A largely increases, thereby hindering images from being transferred properly. Furthermore, when the output of the hot-air drying device 60A largely increases, the viscosity of the binder liquid may be decreased by the heat, in which case the binder liquid might be caused to flow out of the surface area of the coloring layer 50 to the outside thereof by the wind pressure of the hot air.

On the other hand, the IR drying device 60B can heat the binder layer 40 uniformly in a thickness direction, thereby suppressing a dried film from being formed on the binder layer 40 or air bubbles from being created inside the binder layer 40. In addition, the base material 20 is typically made of a polyethylene terephthalate (PET) film, which hardly absorbs rays of infrared wavelengths (3 µm or so). Thus, the base material 20 can resist deformation or damage by the heat. Furthermore, the IR drying device 60B can cause an object that is to be irradiated with the infrared rays to concentratedly generate heat. Thus, the IR drying device 60B can suppress excessive temperature rise inside the system and produce a sufficient heat generation effect immediately after having irradiated the object with the infrared rays. It is thereby possible to make accurate temperature adjustments. Therefore, the IR drying device 60B is more suitable for a binder liquid DTF image forming system than the above hot-air drying device 60A.

To improve the drying capacity of the IR drying device 60B, a method may be employed to use a reflecting member to concentrate the infrared rays emitted from the IR light source on an object. In many cases, however, the configuration of such reflecting members is already designed so as to reflect rays at an optimum angle; thus, there may be little room for the improvement.

In light of the above, other methods for accelerating drying of both the binder layer 40 and the coloring layer 50 are proposed in the present disclosure. Hereinafter, the present disclosure will be described using a binder liquid DTF image forming system as an example. Constituent elements, such as members or constituent components having the same functions or shapes, are denoted by the same reference signs in the drawings of the present disclosure for use in the following description, and duplicate descriptions thereof will be omitted.

### Transfer Layer

FIG. 6 is a view of a configuration of a transfer layer according to an embodiment of the present disclosure.

As illustrated in FIG. 6, a transfer layer 1 on a base material 20 includes: a coloring layer 50; a binder layer 40; and an infrared-absorptive heat-generating layer 70 between the coloring layer 50 and the binder layer 40. The transfer layer 1 described herein refers to a layer to be separated from a base material 20 and transferred onto a recording medium after both the binder layer 40 and the coloring layer 50 have been dried. For that purpose, provided between the transfer layer 1 and the base material 20 is a release layer 2, which helps to separate the transfer layer 1 from the base material 20. The release layer 2 is made of, for example, a silicone resin.

The coloring layer 50, which is one of the components constituting the transfer layer 1, includes: a colored first ink layer 51 formed with a colored ink except a white ink; and a white second ink layer (foundation layer) 52 formed with a white ink. The first ink layer 51 is a layer representing an image on the base material 20, similar to the first ink layer described above. The second ink layer 52 is a layer provided as a foundation layer, which highlights the color of the first ink layer 51 after the transfer layer 1 has been transferred onto the base material 20. If the foundation layer is unnecessary for the coloring layer 50, the white second ink layer 52 does not have to be formed.

The coloring layer 50 is formed by discharging ink onto a coloring liquid receiving layer 3 on the base material 20. The coloring liquid receiving layer 3 is a layer provided on one surface of the base material 20 with the release layer 2 therebetween. The coloring liquid receiving layer 3 is made of a material containing, for example, silica as a main component thereof. It should be noted that in FIG. 6, each of the coloring liquid receiving layer 3 and the release layer 2 is illustrated so as to be considerably thicker than the actual thicknesses thereof, for the sake of clarity. The actual thickness of the coloring liquid receiving layer 3 is in a range from 3.0 to 30.0 µm, whereas the actual thickness of the release layer 2 is in a range from 0.5 to 1.0 µm. Each of the coloring liquid receiving layer 3 and the release layer 2 is a considerably thinner layer than the base material 20 (having a thickness from 50 to 180 µm).

The binder layer 40 is a layer formed by discharging the binder liquid. This binder liquid contains, for example, a polyurethane resin as a main component, similar to the binder liquid described above.

The infrared-absorptive heat-generating layer 70 is a layer formed by discharging an infrared absorbent (infrared absorption liquid) containing a material having good infrared absorbability. This infrared absorbent can be selected as appropriate from among materials that have at least a better infrared absorption rate than any of the binder liquid for forming the binder layer 40 and the white ink for forming the foundation layer.

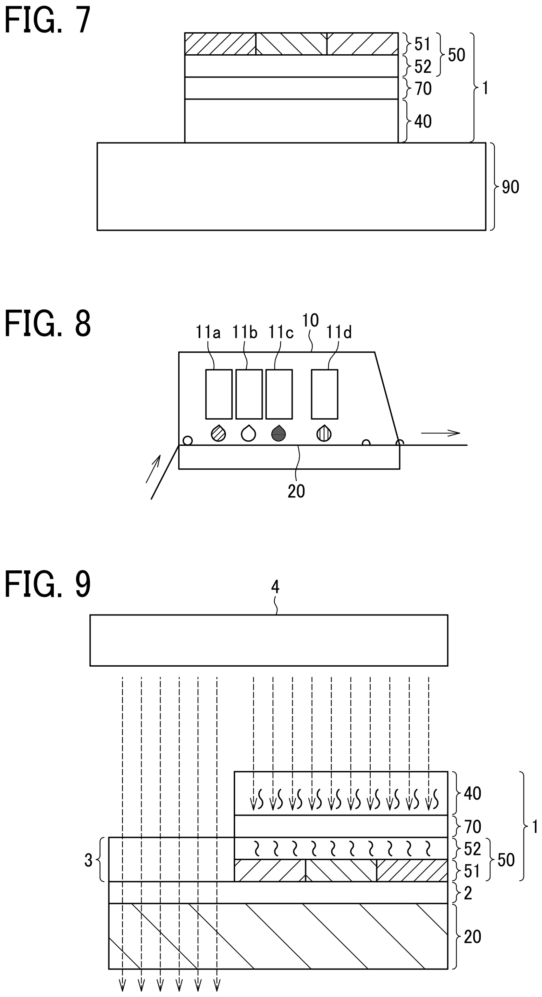

FIG. 7 illustrates a state of the transfer layer 1 that has been separated from the base material 20 and transferred onto a recording medium. When the first ink layer 51, the second ink layer 52, the infrared-absorptive heat-generating layer 70, and the binder layer 40, all of which constitute the transfer layer 1, are transferred onto a recording medium 90, the vertical positions thereof are reversed. More specifically, after the transfer, the binder layer 40, the infrared-absorptive heat-generating layer 70, the second ink layer 52, and the first ink layer 51 are stacked in this order from the surface of the recording medium 90.

### Liquid Discharge Apparatus

Next, a description will be given below of a configuration of a liquid discharge apparatus according to an embodiment of the present disclosure which forms a transfer layer.

FIG. 8 is a view of an example of a configuration of a liquid discharge apparatus 10 according to the present embodiment.

As illustrated in FIG. 8, the liquid discharge apparatus 10 of the present disclosure includes: a first liquid discharge head 11a that discharges a colored ink except a white ink; a second liquid discharge head 11b that discharges a white ink for forming a foundation; a third liquid discharge head 11c that discharges an infrared absorbent; and a fourth liquid discharge head 11d that discharges a binder liquid. In this case, the first liquid discharge head 11a that discharges a colored ink does not necessarily have to discharge a single colored ink. Alternatively, the first liquid discharge head 11a may discharge multiple colored inks, including yellow, cyan, magenta, and black inks for supporting creation of a color image. If the foundation layer is not formed, a white ink might be included in such colored inks. The first liquid discharge head 11a, the second liquid discharge head 11b, the third liquid discharge head 11c, and the fourth liquid discharge head 11d are an example of a liquid discharger.

As illustrated in FIG. 8, when the base material 20 reaches the liquid discharge apparatus 10, the first liquid discharge head 11a first discharges the colored ink onto the base material 20, thereby forming the first ink layer 51 representing an image on the base material 20. The second liquid discharge head 11b then discharges the white ink onto the first ink layer, thereby forming a second ink layer 52 serving as a foundation layer on the first ink layer 51. The third liquid discharge head 11c then discharges the infrared absorbent onto the second ink layer 52, thereby forming the infrared-absorptive heat-generating layer 70 on the second ink layer 52. The fourth liquid discharge head 11d then discharges the binder liquid onto the infrared-absorptive heat-generating layer 70, thereby forming the binder layer 40 on the infrared-absorptive heat-generating layer 70. In this way, the transfer layer 1 (including the first ink layer 51, the second ink layer 52, the infrared-absorptive heat-generating layer 70, and the binder layer 40) illustrated in FIG. 6 is formed on the base material 20.

### Drying Treatment

FIG. 9 is a view of a state of drying treatment according to an embodiment of the present disclosure.

As illustrated in FIG. 9, a drying device 4 may be an IR heater that irradiates an object with infrared rays to cause the object to heat up. As described above, after the transfer layer 1 has been formed on the base material 20 by the liquid discharge apparatus 10, the base material 20 is conveyed toward the drying device 4. When the base material 20 reaches the drying device 4, the drying device 4 irradiates the transfer layer 1 on the base material 20 with the infrared rays. While the drying device 4 is performing the drying treatment, the image forming system 400 according to the present embodiment is conveying the base material 20 in a horizontal position so that the base material 20 is not inclined. One reason for conveying the base material 20 in a horizontal position during the drying treatment is that the binder liquid may flow out immediately after the transfer layer 1 has been conveyed to the drying device 4. Therefore, the image forming system 400 has to suppress the binder liquid from being dripped.

By irradiating both the transfer layer 1 and the base material 20 with the infrared rays, the drying device 4 causes the infrared-irradiated target to generate heat and accelerates drying of the infrared-irradiated target accordingly. In this case, part of the infrared ray from the drying device 4 strikes the binder layer 40, which is one of the components constituting the transfer layer 1. However, since the binder layer 40 is a colorless or pale white layer containing, for example, a polyurethane resin as a main component thereof, the binder layer 40 has low infrared absorption and hardly generates heat accordingly. In addition, since the white second ink layer 52 formed as the foundation layer is a layer containing, for example, titanium oxide that shields or reflects the infrared rays, the second ink layer 52 hardly generates heat even when irradiated with the infrared rays. Likewise, the colored (not white) first ink layer 51 hardly generates heat even when irradiated with the infrared rays because the infrared rays are blocked by the second ink layer 52 disposed above the first ink layer 51, although the first ink layer 51 absorbs infrared rays well in some cases. In this case, both the coloring liquid receiving layer 3 and the release layer 2 within the surface area of the base material 20 in which the second ink layer 52 is not formed are also irradiated with the infrared rays. However, both the coloring liquid receiving layer 3 containing, for example, silica as a main component thereof and the release layer 2 containing, for example, a silicone resin as a main component thereof have low infrared absorption and hardly generate heat accordingly. Therefore, the binder layer 40, the first ink layer 51, the second ink layer 52, the coloring liquid receiving layer 3, and the release layer 2, all of which are the layers constituting the transfer layer 1, may hardly contribute to the acceleration of the drying even when being irradiated with the infrared rays.

In contrast with the above layers, the infrared-absorptive heat-generating layer 70 between the second ink layer 52 (coloring layer 50) and the binder layer 40 can absorb the infrared rays and effectively generate heat when being irradiated with the infrared rays because the infrared-absorptive heat-generating layer 70 contains a component having good infrared absorbability. When the infrared-absorptive heat-generating layer 70 generates the heat as a result of the irradiation of the infrared rays, the heat is transmitted to the binder layer 40 disposed above the infrared-absorptive heat-generating layer 70 as well as the coloring layer 50 disposed below the infrared-absorptive heat-generating layer 70. Both the binder layer 40 and the coloring layer 50 are thereby heated. In this way, the drying of both the binder layer 40 and the coloring layer 50 can be accelerated.

In the present embodiment, as described above, the infrared-absorptive heat-generating layer 70 that effectively absorbs the infrared rays and generates heat is provided between the binder layer 40 and the coloring layer 50. This configuration can accelerate drying of both the binder layer 40 and the coloring layer 50, thereby shortening the drying time. According to the present embodiment, the drying time can be shortened, and the conveying path for the drying can be shortened, so that the liquid discharge system can be made compact.

Apart from the present embodiment, there is a technique for using ink containing an infrared absorbent to improve the drying property of the ink, namely, accelerate drying of the ink (e.g., see Japanese Unexamined Patent Application Publication No. 2001-226618). In many cases, however, infrared absorbents produce distinct colors when being contained in ink and thus may hinder the ink from producing an original color thereof. In the present embodiment, the ink layer (coloring layer 50) contains no infrared absorbent, and the infrared-absorptive heat-generating layer 70 is provided independently of the ink layer. This configuration can accelerate drying of the ink, thereby allowing the ink to appropriately produce an original color thereof.

### Image Forming System

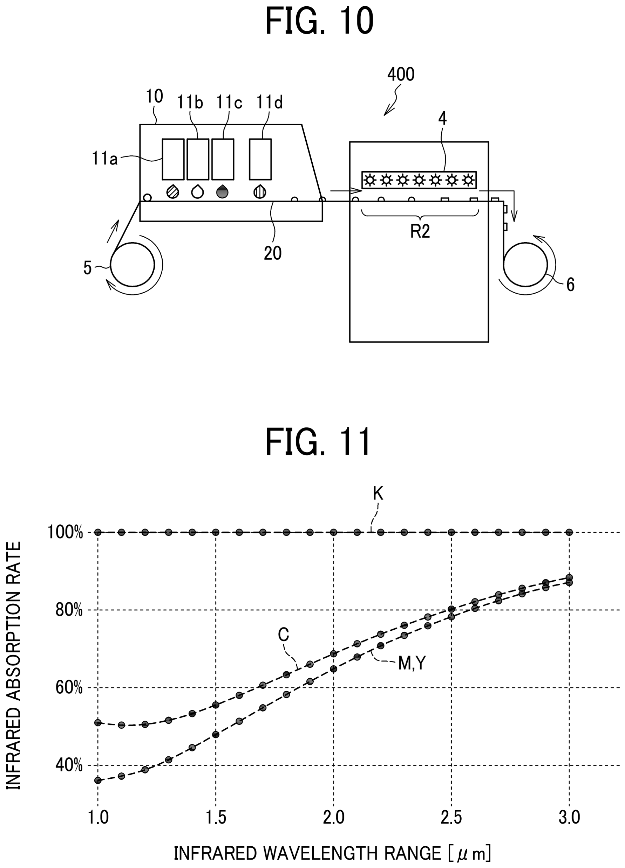

FIG. 10 is a view of an example of a configuration of an image forming system 400 that employs an embodiment of the present disclosure.

As illustrated in FIG. 10, the image forming system 400 is a binder liquid DTF image forming system that includes a base material feeding device 5, a liquid discharge apparatus 10, a drying device 4, a base material collecting device 6, and some other components. It should be noted that neither a step of transferring a transfer layer on a base material onto a recording medium nor a transfer device used in this transfer step will be described herein.

The base material feeding device 5 is a device by which a base material 20 wound in a roll shape is to be fed, similar to the above base material feeding device 101. When the base material 20 fed by the base material feeding device 5 is conveyed to the liquid discharge apparatus 10, the above coloring layer 50, infrared-absorptive heat-generating layer 70, and binder layer 40 are sequentially formed on the base material 20, after which the base material 20 is subjected to the drying treatment by the drying device 4. After the drying treatment, the base material 20 is wound around and collected by the base material collecting device 6.

The image forming system 400 can accelerate drying of both the binder layer 40 and the coloring layer 50, thereby shortening a drying time thereof. This configuration can make a conveying path R2 used for the drying shorter than the conveying path R1 in the image forming system 300 illustrated in FIG. 3, which does not employ the present embodiment (R2 < R1). According to the present embodiment, the image forming system 400 can be made compact and superior in space-saving, in particular in a horizontal direction. Furthermore, according to the present embodiment, the drying time can be shortened, so that the productivity is improved.

According to some embodiments of the present disclosure, as described above, image forming systems and other liquid discharge systems can be made compact. Such compact systems can be easily installed and are superior in convenience and productivity.

### Specific Example of Infrared Absorbent

Next, a description will be given below of a specific example of an infrared absorbent used in an embodiment of the present disclosure.

The infrared absorbent can be, for example, an ink of a type identical to the ink used for forming images (first ink layer 51). Any colored ink except a white ink can be expected to produce a certain level of infrared absorption effect and thus can be used as the infrared absorbent. However, since different inks have different infrared absorption rates, an appropriate ink may be selected in accordance with a required infrared absorption rate (calorific value).

FIG. 11 illustrates an example of infrared absorption rates of inks used for forming images.

In the graph of FIG. 11, the infrared absorption rates of a magenta ink M, a yellow ink Y, a cyan ink C, and a black ink K, which are typically used for forming images, are plotted within an infrared wavelength range. As can be seen from this graph, in particular, the black ink K exhibits a much higher absorption rate within the range from the near-infrared wavelength (i.e., at a wavelength of approximately 1 µm) to the far-infrared wavelength (i.e., at a wavelength of approximately 3 µm) than any of the inks M, Y, and C. Therefore, when the black ink K is used as the infrared absorbent, the infrared absorbent can efficiently absorb infrared rays, thereby producing an effective heat generation effect.

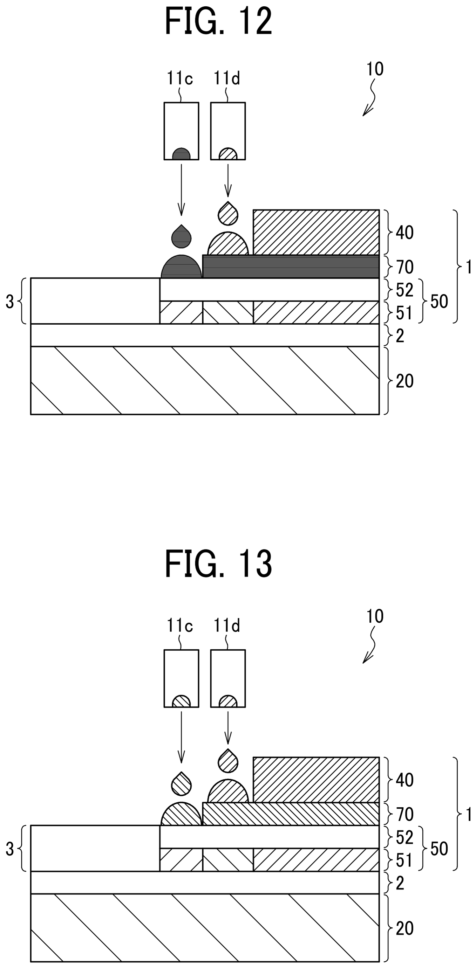

FIG. 12 is a view of an example of a liquid discharge apparatus that discharges a black ink as the infrared absorbent.

FIG. 12 illustrates a state of the transfer layer 1 in which the first ink layer 51 representing an image and the second ink layer 52 serving as the foundation layer have been formed. After the second ink layer 52 has been formed, the third liquid discharge head 11c discharges the black ink (infrared absorbent) onto the second ink layer 52, thereby forming the infrared-absorptive heat-generating layer 70 on the second ink layer 52. The fourth liquid discharge head 11d then discharges the binder liquid onto the infrared-absorptive heat-generating layer 70, thereby forming the binder layer 40 on the infrared-absorptive heat-generating layer 70.

In the above case, the infrared-absorptive heat-generating layer 70 is formed with the black ink of the type identical to the type of the black ink (coloring liquid) used for forming the first ink layer 51 (coloring layer). The material of the black ink K may be carbon black having a good infrared absorption rate.

As described above, the type of the ink used to form the infrared-absorptive heat-generating layer 70 is identical to the type of the black ink used to form the first ink layer 51, so that those inks can be managed at low cost. Furthermore, if the amount of the black ink consumed is smaller than the consumption amount of other colored inks, the black ink can be used as an agent that absorbs infrared rays to generate heat, thereby decreasing the difference in the consumption amount between the black ink and any other ink.

FIG. 13 illustrates an example of a liquid discharge apparatus that discharges an infrared absorbent except a black ink.

In the example of FIG. 13, the third liquid discharge head 11c discharges an infrared absorbent except a black ink. After the second ink layer 52 has been formed, the third liquid discharge head 11c discharges the infrared absorbent except a black ink onto the second ink layer 52, thereby forming the infrared-absorptive heat-generating layer 70 on the second ink layer 52. The fourth liquid discharge head 11d then discharges the binder liquid onto the infrared-absorptive heat-generating layer 70, thereby forming the binder layer 40 on the infrared-absorptive heat-generating layer 70.

As in this embodiment, the infrared absorbent may be an infrared absorbent (liquid) except the black ink (coloring liquid) used to form the first ink layer 51 (coloring layer). If not having to exhibit a very high infrared absorption rate, for example, the infrared absorbent containing a lower amount of carbon black than the black ink may be used. In this case, by decreasing the content of an infrared absorbing component, the cost reduction can be expected. Alternatively, an infrared absorbent having a higher infrared absorption rate than the black ink may be used.

The infrared absorbent may be an ink (liquid) containing an infrared absorbing material except the carbon black. For example, the infrared absorbent may be an infrared absorbent containing an infrared absorbing material, such as tin-doped indium oxide (ITO) or antimony-doped tin oxide (ATO) used for solar cells, for example.

### Method for Discharging Infrared Absorbent

Next, a method, according to an embodiment of the present disclosure, for discharging the infrared absorbent will be described below.

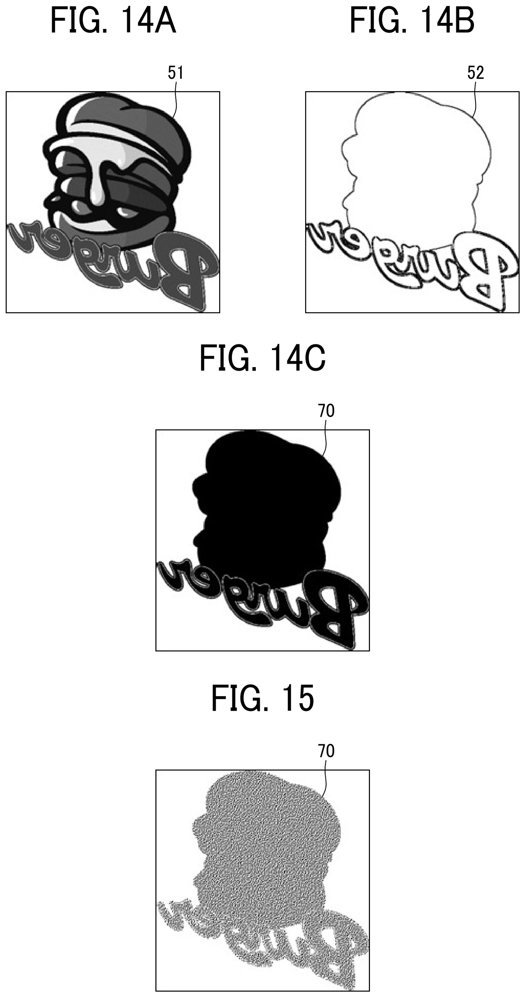

FIG. 14A is a view of an example of the first ink layer 51 on a base material; FIG. 14B is a view of an example of the second ink layer 52; and FIG. 14C is the infrared-absorptive heat-generating layer 70.

As described above, the first ink layer 51 representing an image is formed on the base material, the second ink layer 52 serving as the foundation layer is then formed on the first ink layer 51, and the infrared-absorptive heat-generating layer 70 is then formed on the second ink layer 52 (see FIG. 6). When the transfer layer on the base material is transferred onto a recording medium, the positions of the layers constituting the transfer layer are reversed. That is why the second ink layer 52 and the first ink layer 51 are disposed above the infrared-absorptive heat-generating layer 70 in this order (see FIG. 7).

If the infrared-absorptive heat-generating layer 70, which will be disposed below both the first ink layer 51 and the second ink layer 52, is formed of a solid infrared absorbent, as illustrated in FIG. 14C, the color of the infrared-absorptive heat-generating layer 70 may be seen through both the first ink layer 51 and the second ink layer 52, thereby hindering the ink forming the first ink layer 51 from producing an original color thereof.

The second ink layer 52 formed as a foundation layer is basically provided to mask the colors of the infrared-absorptive heat-generating layer 70 and other layers, thereby highlighting the color of the first ink layer 51. However, because of an insufficient ink-holding capacity of the coloring liquid receiving layer 3 (see FIG. 6) provided on the base material 20, the second ink layer 52 cannot be formed too thick. Depending on the thickness of the second ink layer 52, the second ink layer 52 may fail to completely mask the color of the infrared-absorptive heat-generating layer 70. In such cases, the color of the infrared-absorptive heat-generating layer 70 might be seen through both the first ink layer 51 and the second ink layer 52, thereby hindering the ink forming the first ink layer 51 from producing an original color thereof.

In the above case, as in the example of FIG. 15, the infrared-absorptive heat-generating layer 70 may be formed through halftone processing. If the liquid discharge head described above is used as a unit for discharging an infrared absorbent, it is possible to control the resolution and the discharge amount to the same extent as the image formation. Therefore, by discharging the infrared absorbent from the liquid discharge head based on the resolution and the discharge amount resulting from the halftone processing, the apparent color of the infrared-absorptive heat-generating layer 70 can be made thinner than the apparent color of solid painting. Performing the halftone processing in this manner can suppress the color of the infrared-absorptive heat-generating layer 70 from being seen through both the first ink layer 51 and the second ink layer 52 after the transferring. As a result, the ink forming the first ink layer 51 can produce the original color.

In addition, if a large amount of infrared absorbent is discharged, the infrared-absorptive heat-generating layer 70 may protrude from the base material 20. In such cases, the amount of the infrared absorbent may be decreased through the halftone processing as well.

A method using the halftone processing may be either the same as or different from the method for forming an image with the halftone processing. In the example of FIG. 15, the infrared-absorptive heat-generating layer 70 is subjected to the halftone processing using a distributed frequency modulation (FM) mask pattern. However, the halftone processing method is not limited to the method using the distributed FM mask pattern and may be halftone processing using an amplitude modulation (AM) mask pattern or a complete random mask pattern, an error diffusion process, or any other halftone processing method.

### Another Example of Liquid Discharge Apparatus

Some embodiments of the present disclosure have been described using, as an example, a so-called line type liquid discharge apparatus, which discharges different liquids from the liquid discharge head while immobilizing the liquid discharge head relative to a recording medium to be conveyed by the liquid discharge apparatus. However, the applications of embodiments of the present disclosure are not limited to such line type liquid discharge apparatuses and may also include other types of liquid discharge apparatuses.

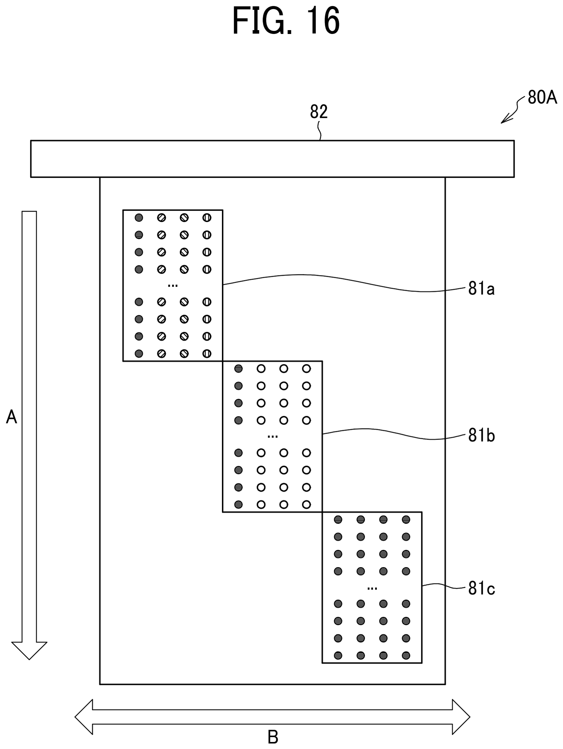

For example, some embodiments of the present disclosure can also be applied to a serial-type liquid discharge apparatus 80A, as illustrated in FIG. 16. The liquid discharge apparatus 80A is a serial-type liquid discharge apparatus in which a plurality of liquid discharge heads 81a, 81b, and 81c is mounted in a staggered fashion (shifted from each other). The plurality of liquid discharge heads 81a, 81b, and 81c, which is an example of a liquid discharger, is mounted on a single carriage 82. Each of the liquid discharge heads 81a, 81b, and 81c can reciprocate in a main-scanning direction B, which is orthogonal to a direction (sub-scanning direction) A in which a recording medium is to be conveyed. In this case, the liquid discharge head 81a discharges colored inks, including yellow, magenta, cyan, and black inks; the liquid discharge head 81b discharges a white ink and an infrared absorbent; and the liquid discharge head 81c discharges a binder liquid. When the recording medium is conveyed to a position facing the liquid discharge heads 81a, 81b, and 81c, the liquid discharge heads 81a, 81b, and 81c discharge the corresponding liquids while reciprocating in the main-scanning direction B.

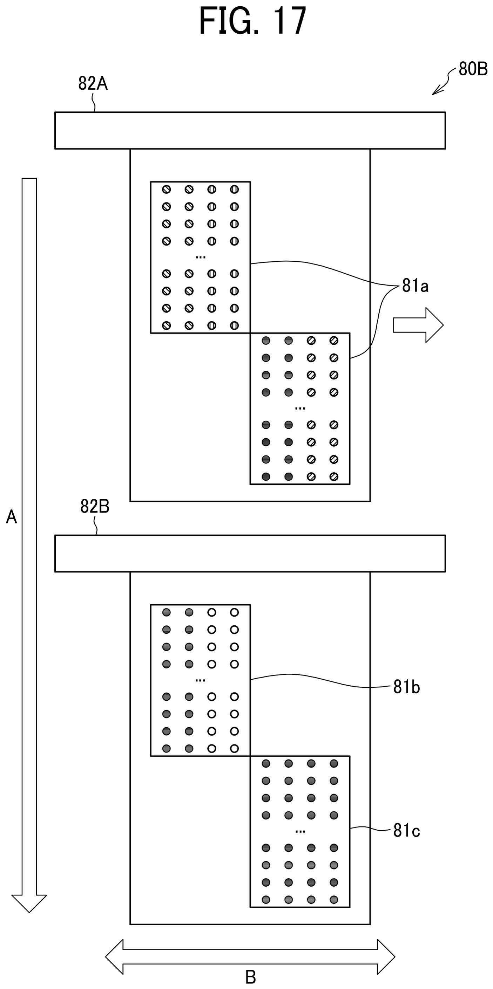

FIG. 17 is a view of another example of a serial-type liquid discharge apparatus that employs an embodiment of the present disclosure.

In a liquid discharge apparatus 80B illustrated in FIG. 17, a plurality of liquid discharge heads 81a, 81b, and 81c is mounted separately on two carriages 82A and 82B. As in this example, the plurality of liquid discharge heads 81a, 81b, and 81c may be mounted separately on the two carriages 82A and 82B. Alternatively, a plurality of carriages may be prepared for respective liquid discharge heads that discharge colored inks, a white ink, an infrared absorbent, and a binder liquid so that these liquid discharge heads can move independently of one another. The colors of inks to be discharged from the liquid discharge head include yellow, magenta, cyan, and black inks, as well as some other distinctive colored inks.

A liquid discharge apparatus according to embodiments of the present disclosure may be implemented by a dispenser, instead of a liquid discharge head that discharges liquid in droplet form. Such dispensers, which can discharge liquids at higher pressures than pressures in liquid discharge heads, may be used as liquid discharge apparatuses that can discharge highly viscous binder liquids. Using dispensers in this manner can appropriately discharge binder liquids with a reduced risk of the nozzles being clogged.

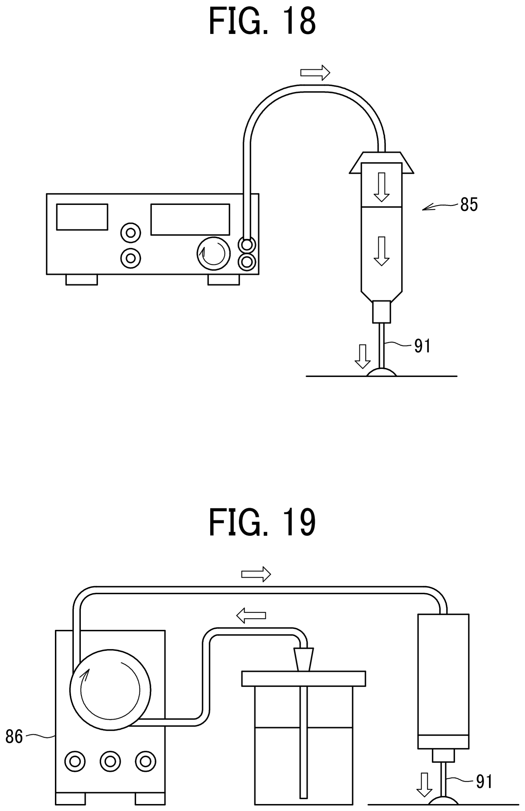

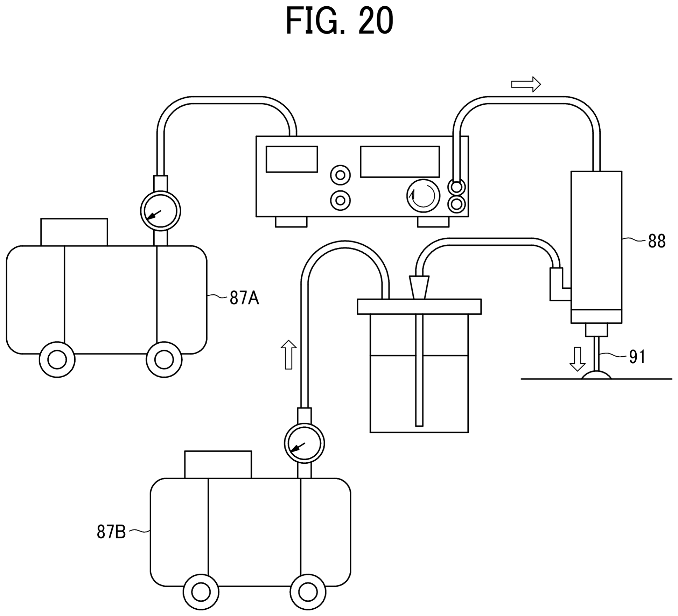

Examples of types of dispensers include: a syringe type as illustrated in FIG. 18 in which air is supplied to a piston syringe mechanism 85 to discharge a liquid 91; a tube type as illustrated in FIG. 19 in which a rotary pump 86 discharges a liquid 91; and a valve type as illustrated in FIG. 20 in which compressors 87A and 87B open or close a valve 88 to discharge a liquid 91.

### <Hardware Configuration of Liquid Discharge System>

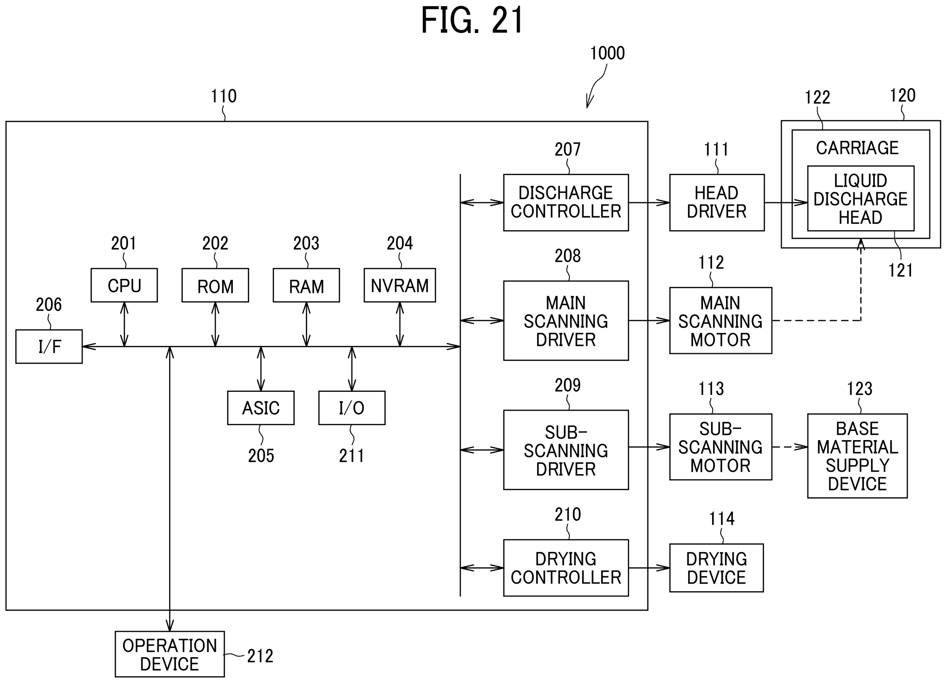

FIG. 21 is a block diagram illustrating a hardware configuration of a liquid discharge system 1000.

As illustrated in FIG. 21, the liquid discharge system 1000 includes a controller 110.

The controller 110 includes a central processing unit (CPU) 201 that controls the entire system, a read-only memory (ROM) 202, a random-access memory (RAM) 203, and a non-volatile random-access memory (NVRAM) 204, and an application-specific integrated circuit (ASIC) 205. The ROM 202, the RAM 203, the NVRAM 204, and the ASIC 205 are connected to the CPU 201.

The ROM 202 stores programs to be executed by the CPU 201, and other fixed information. The RAM 203 temporarily stores image data an other types of data. The NVRAM 204 holds data even while the power supply of the system is shut off. The ASIC 205 performs various types of signal processing, image processing such as sorting, and other types of processing of input and output signals for controlling the entire system.

The controller 110 includes an interface (I/F) 206, a discharge controller 207, a main scanning motor driver 208, a sub-scanning motor driver 209, a drying controller 210, and an input/output (I/O) 211.

The I/F 206 is an interface for transmitting and receiving signals to and from a host device.

For example, the I/F 206 receives image data generated by a printer driver of a host device such as an information processing device, an image reading device, and an image capturing device via a cable or a network. In other words, the generation and output of print data to the controller 110 may be performed by a printer driver of a host device. The CPU 201 reads and analyzes image data in a receive buffer included in the I/F 206. The ASIC 205 performs image processing or sorting processing, and the image data is transferred to the discharge controller 207 and the head driver 111.

The discharge controller 207 generates a drive waveform for driving a liquid discharge head 121, and outputs image data for selectively driving a pressure generator that generates pressure for the liquid discharge head 121, which is an example of a liquid discharger, to discharge liquid from nozzles, and various data accompanying the image data, to the head driver 111.

The discharge controller 207 may have a computer configuration including a CPU, a ROM, and a RAM. The discharge controller 207 exhibits desired functions by the CPU executing programs stored in the ROM or any other recording medium.

The program executed by the CPU of the discharge controller 207 may be recorded and provided in a computer-readable recording medium such as a compact disc-read-only memory (CD-ROM), a flexible disk (FD), a compact disc-recordable (CD-R), or a digital versatile disc (DVD) in a file of an installable format or an executable format.

Furthermore, the program executed by the CPU of the discharge controller 207 may be stored in a computer connected to a network such as the Internet and provided by being downloaded via the network. The program executed by the CPU of the discharge controller 207 may be provided or distributed via a network such as the Internet.

The main scanning motor driver 208 drives the main scanning motor 112. The main scanning motor 112 is driven to move a carriage 122 including the liquid discharge head 121 in the main scanning direction. The sub-scanning motor driver 209 drives the sub-scanning motor 113. The sub-scanning motor 113 is driven to operate a base material supply device 123 that supplies a base material to which liquid is to be discharged by the liquid discharge head 121.

The drying controller 210 controls a drying device 114 that dries the liquid discharged on the base material. For example, the drying controller 210 controls an infrared (IR) heater included in the drying device 114.

The liquid discharge system 1000 includes an operation device 212. The operation device 212 is, for example, an operation panel for inputting and displaying various types of information.

In the liquid discharge system 1000 having such a hardware configuration, when a base material is supplied to the liquid discharge apparatus 120, ink, infrared absorbing agent, and binder liquid are sequentially discharged from the liquid discharge head 121 to the base material while the liquid discharge head 121 moves in the main scanning direction. The discharge operation of the liquid discharge head 121 at this time is controlled based on image data generated by the printer driver. Thus, an ink layer for forming an image, an infrared absorbing-and-heating layer for absorbing infrared rays and generating heat, and a binder layer functioning as an adhesive layer are formed on the base material. Then, the base material is sent to the drying device 114 and subjected to drying treatment.

In FIG. 21, the liquid discharge head 121 is a serial-type liquid discharge head that discharges liquid while being moved in the main scanning direction by the carriage 122. In this case, the liquid discharge head 121 and the carriage 122 in FIG. 21 correspond to the liquid discharge heads 81a, 81b, and 81c and the carriages 82, 82A, and 82B in FIGS. 16 and 17. In a case where the liquid discharge head 121 is a line-type liquid discharge head, the main scanning motor driver 208, the main scanning motor 112, and the carriage 122 in FIG. 21 may be omitted. In such a case, the liquid discharge head 121 corresponds to the liquid discharge heads 11a, 11b, 11c, and 11d in FIGS. 8 and 10. The base material supply device 123 and the drying device 114 in FIG. 21 correspond to the base material supply device 5 and the drying device 4 in FIG. 10. In a case where the liquid discharge system 1000 of FIG. 21 is applied to a dispenser, the liquid discharge head 121 of FIG. 21 corresponds to a syringe-type dispenser illustrated in FIG. 18, a tube-type dispenser illustrated in FIG. 19, or a valve-type dispenser illustrated in FIG. 20.

Although some embodiments of the present disclosure have been described using a binder liquid DTF image forming system as an example, embodiments of the present disclosure can be applied to binder liquid DTF image forming systems as well as other types of image forming systems. Moreover, embodiments of the present disclosure can be applied to liquid discharge systems that discharge liquid for the purpose of forming images as well as liquid discharge systems that discharge liquid for other purposes, such as simply for coloring.

The liquid discharge method according to an embodiment of the present disclosure has been described using, as examples, an inkjet method by which a liquid discharge head discharges liquid and a dispenser method by which a dispenser discharges liquid; however, any other discharge method may be employed to discharge liquid.

In summary, embodiments of the present disclosure described above include at least the following aspects.

### Aspect 1

According to Aspect 1, a liquid discharge apparatus discharges a coloring liquid onto a base material to form a coloring layer and then discharges a binder liquid to form a binder layer. The liquid discharge apparatus includes an infrared-absorptive heat-generating layer between the coloring layer and the binder layer.

### Aspect 2

According to Aspect 2, in the liquid discharge apparatus of Aspect 1, the coloring layer includes a first ink layer formed with a colored ink except a white ink and a second ink layer formed with a white ink, and the infrared-absorptive heat-generating layer is formed between the second ink layer and the binder layer.

### Aspect 3

According to Aspect 3, in the liquid discharge apparatus of Aspect 1 or 2, an infrared absorbent forming the infrared-absorptive heat-generating layer is a liquid of a type identical to a type of the coloring liquid forming the coloring layer.

### Aspect 4

According to Aspect 4, in the liquid discharge apparatus of Aspect 1 or 2, an infrared absorbent forming the infrared-absorptive heat-generating layer is a liquid of a type different from a type of the coloring liquid forming the coloring layer.

### Aspect 5

According to Aspect 5, in the liquid discharge apparatus of Aspect 1 or 2, an infrared absorbent forming the infrared-absorptive heat-generating layer is a liquid having an infrared absorption rate higher than an infrared absorption rate of the coloring liquid forming the coloring layer.

### Aspect 6

According to Aspect 6, in the liquid discharge apparatus of any one of Aspects 1 to 5, the infrared-absorptive heat-generating layer is formed by subjecting an infrared absorbent to halftone processing and discharging the infrared absorbent.

### Aspect 7

According to Aspect 7, in the liquid discharge apparatus of any one of Aspects 1 to 6, the binder liquid is discharged by an inkjet method or a dispenser method.

### Aspect 8

According to Aspect 8, a liquid discharge system includes: the liquid discharge apparatus according to any one of Aspects 1 to 7; and a drying device that emits infrared rays to the base material on which the coloring layer, the infrared-absorptive heat-generating layer, and the binder layer have been formed by the liquid discharge apparatus and dries the base material.

### Aspect 9

According to Aspect 9, a liquid discharge method for discharging a coloring liquid onto a base material to form a coloring layer and then discharging a binder liquid to form a binder layer includes forming an infrared-absorptive heat-generating layer after forming of the coloring layer and before forming of the binder layer, to position the infrared-absorptive heat-generating layer between the coloring layer and the binder layer.

## Claims

1. A liquid discharge apparatus (10), comprising:
a liquid discharger (121); and
a controller (110) configured to cause the liquid discharger to:
discharge a coloring liquid to a base material to form a coloring layer;
form an infrared-absorptive heat-generating layer; and
discharge a binder liquid to form a binder layer so that the infrared-absorptive heat-generating layer (70) is between the coloring layer and the binder layer.

2. The liquid discharge apparatus (10) according to claim 1,
wherein the coloring layer includes a first ink layer of a colored ink other than a white ink and a second ink layer of a white ink, and the infrared-absorptive heat-generating layer (70) is between the second ink layer and the binder layer.

3. The liquid discharge apparatus (10) according to claim 1 or 2,
wherein an infrared absorbent of the infrared-absorptive heat-generating layer (70) is a liquid of a type identical to a type of the coloring liquid of the coloring layer.

4. The liquid discharge apparatus (10) according to claim 1 or 2,
wherein an infrared absorbent of the infrared-absorptive heat-generating layer (70) is a liquid of a type different from a type of the coloring liquid of the coloring layer.

5. The liquid discharge apparatus (10) according to claim 1 or 2,
wherein an infrared absorbent of the infrared-absorptive heat-generating layer (70) is a liquid having an infrared absorption rate higher than an infrared absorption rate of the coloring liquid of the coloring layer.

6. The liquid discharge apparatus (10) according to any one of claims 1 to 5,
wherein the infrared-absorptive heat-generating layer (70) includes an infrared absorbent discharged using halftone processing.

7. The liquid discharge apparatus (10) according to any one of claims 1 to 6,
wherein the binder liquid is discharged by an inkjet method or a dispenser method.

8. A liquid discharge system (400) comprising:
the liquid discharge apparatus (10) according to any one of claims 1 to 7; and
a drying device (4) to emit infrared rays to the base material on which the coloring layer, the infrared-absorptive heat-generating layer (70), and the binder layer have been formed by the liquid discharge apparatus (10), to dry the base material.

9. A liquid discharge method, comprising:
discharging a coloring liquid to a base material to form a coloring layer;
forming an infrared-absorptive heat-generating layer (70) after forming of the coloring layer; and
discharging a binder liquid to form a binder layer so that the infrared-absorptive heat-generating layer (70) is between the coloring layer and the binder layer.
